# EUROPÄISCHE PATENTSCHRIFT

(11) **EP 1 448 921 B1**
(45) Veröffentlichungstag und Bekanntmachung des Hinweises auf die Patenterteilung: **06.12.2006**
(21) Anmeldenummer: 02774454.9
(22) Anmeldetag: 10.10.2002
(51) Int. Cl.: F16K 1/22

(54) **DROSSELKLAPPENSTUTZEN**
THROTTLE VALVE BODY
CORPS DE PAPILLON

(30) Priorität: 26.11.2001 DE 10157963
(43) Veröffentlichungstag der Anmeldung: 25.08.2004
(73) Patentinhaber: SIEMENS AKTIENGESELLSCHAFT, 80333 München (DE)
(72) Erfinder: BENDER, Günther, 61191 Rodheim (DE)
(86) Internationale Anmeldenummer: PCT/DE2002/003822
(87) Internationale Veröffentlichungsnummer: WO 2003/046419

(56) Entgegenhaltungen:
- DE-A- 10 105 526
- US-A- 5 275 375
- US-A- 5 615 861
- US-A- 6 036 172

## Beschreibung

Die Erfindung bezieht sich auf einen Drosselklappenstutzen für einen Verbrennungsmotor, mit einem Gehäuse und mit einer Durchströmöffnung des Gehäuses, die durch eine Drosselklappe absperrbar ist, wobei die Drosselklappe auf einer Drosselklappenwelle angeordnet ist, welche um ihre quer zur Längsachse der Durchströmöffnung sich erstreckende Längsachse schwenkbar antreibbar ist und deren freie Enden in Lagern schwenkbar gelagert sind, die in Lagerausnehmungen im Gehäuse angeordnet sind und wobei die Drosselklappenwelle durch eine Axialsicherung gegen axiale Verschiebung gesichert ist, wobei die Drosselklappe an ihren Bereichen, an denen die Drosselklappenwelle axial hervorsteht, Anlaufflächen besitzt, die an gehäusefesten Abstützbereichen in Anlage sind.

Bei derartigen Drosselklappenstutzen ist es zur Axialsicherung der Drosselklappenwelle bekannt, an deren in die Lagerausnehmung ragenden Bereichen eine radial umlaufende Nut anzuordnen, in die ein an dem Gehäuse befestigtes Halteelement radial hineinragt.

Ist die Nut in der Drosselklappenwelle eingearbeitet, so schwächt dies die Stabilität der Drosselklappenwelle. Auf die Drosselklappenwelle aufgepresste Ringe, zwischen denen die Nut gebildet ist, benötigen genaue und damit teure Passungen und beinhalten die Gefahr einer Wellenverformung und damit eine Verschlechterung des Wellenrundlaufs. Dies führt zu erhöhter Reibung und damit einem schlechteren Momentenhaushalt, der stärkere Rückzugsfedern zur Rückstellung der Drosselklappe in die Leerlaufstellung und stärkere und somit größere Motoren zum Verstellen der Drosselklappenwelle benötigt.

Die Ausbildung der Axialsicherung ist aufwendig, benötigt viel Bauraum und ist nur umständlich montierbar. Darüber hinaus müssen bei derartigen Axialsicherungen hohe Herstellungsgenauigkeiten eingehalten werden, damit die Drosselklappe genau in der Durchströmöffnung positioniert werden kann.

Aus der US-A-5 275 375 ist ein Drosselklappenstutzen der eingangs genannten Art bekannt, bei dem die Abstützbereiche durch die die Lagerausnehmungen umgebenden Bereiche der Innenwand der Durchströmöffnung des Gehäuses gebildet werden.
Damit ist die Lage der Drosselklappe in der Durchströmöffnung von den Herstellungstoleranzen von Drosselklappe und Durchströmöffnung abhängig.

Aufgabe der Erfindung ist es daher einen Drosselklappenstutzen der eingangs genannten Art zu schaffen, der bei einfachem Aufbau leicht und exakt positioniert in der Durchströmöffnung einbaubar und axial sicherbar ist.

Diese Aufgabe wird erfindungsgemäß dadurch gelöst, dass die Abstützbereiche die zur Durchströmöffnung gerichteten Stirnseiten der Lager sind.

Durch die Anlage der Drosselklappe mit ihren Anlaufflächen an den gehäusefesten Abstützbereichen erfolgt nicht nur eine Axialsicherung der Position der Drosselklappenwelle sondern gleichzeitig auch eine exakte Positionierung der Drosselklappenwelle in der Durchströmöffnung des Drosselklappenstutzens.

Es wird eine einfache keinen wesentlichen Bauteilaufwand benötigende Ausbildung erzielt. Bei der Montage durch die Positionierung der Lager wird sowohl die genaue Lage der vorher mit der Drosselklappenwelle fest verbundenen Drosselklappe in der Durchströmöffnung als auch ein genau definierter Abstand der Lager zueinander erreicht, der sich an den tatsächlichen Maßen der Drosselklappe und der Durchströmöffnung orientiert und so vorhandene Toleranzen kompensiert. Dies ist vorteilhafterweise bei Drosselklappenstutzen anwendbar, deren Drosselklappe und Gehäuse aus Metall bestehen.

Um in jeder Stellung der Drosselklappe ein gleiches Axialspiel sicher zu stellen, können die Anlaufflächen sich zur Längsachse der Drosselklappenwelle rechtwinklig und zueinander parallel erstrecken.

Dem gleichen Zweck dient es, wenn die Abstützbereiche sich rechtwinklig zur Längsachse der Drosselklappenwelle erstrecken.

Weist die Drosselklappe eine Aufnahmehülse auf, in deren Ausnehmung die Drosselklappenwelle fest angeordnet ist und deren stirnseitige Enden die Anlaufflächen bilden, so werden auf einfache Weise Anlaufflächen an der Drosselklappenwelle erreicht.

Zur Vermeidung von Leckluft bei geschlossener Drosselklappe kann auf einfache Weise die Drosselklappe eine stadionförmige Umlaufkontur besitzen, die ausgehend von den zueinander parallelen Anlaufflächen kreis- und/oder bogenförmig ausgebildet ist.

Vorzugsweise entspricht die Erstreckung der Abstützbereiche in Richtung der Längsachse der Durchströmöffnung und/oder quer zur Richtung der Längsachse der Durchströmöffnung etwa dem äußeren Durchmesser der Aufnahmehülse.

Um nach Einsetzen der Drosselklappe in die Durchströmöffnung und Einführung der Drosselklappenwelle in die Axialausnehmung der Aufnahmehülse die Drosselklappe mit der Drosselklappenwelle fest zu verbinden, kann die Drosselklappenwelle mittels eine Aufnahmehülse und Drosselklappenwelle quer durchragenden Stifts oder einer quer durchragenden Schraube in der Axialausnehmung der Aufnahmehülse befestigt sein.

Eine einfache Montage zur exakten Positionierung der Drosselklappe in der Durchströmöffnung und gleichzeitiger Axialsicherung wird dadurch erreicht, dass die Lager Lagerhülsen aufweisen, die mit Presspassung in die Lagerausnehmungen des Gehäuses eingesetzt sind, wobei die Lagerhülsen bis in ihre an den Anlaufflächen anliegenden Stellung in die Lagerausnehmungen axial eingepresst werden.

Dabei können die Anlaufflächen an der Drosselklappe einfach ausgestaltet werden, wenn die Lagerhülsen um ein geringes Maß in die Durchströmöffnung ragen.

Grundsätzlich können die Lager sowohl als Gleitlager mit Lagerbuchsen oder aber auch als Wälzlager, insbesondere als Nadellager ausgebildet sein.

Sind die Lager Wälzlager mit einem Innenring und einem Außenring, so bilden die zur Durchströmöffnung gerichteten Stirnseiten der Innenringe oder der Außenringe die Abstützbereiche. Bei der Montage der Wälzlager sind deren axialen Auspresskräfte gleichzeitig die Belastbarkeitsgrenzen der Axialsicherung.

Das Gehäuse und/oder die Drosselklappe können entweder aus einem Kunststoff oder aus Metall, insbesondere Leichtmetall bestehen.

Zur einfachen Herstellbarkeit ist dabei das Gehäuse und/oder die Drosselklappe ein Spritzgussteil.

Ausführungsbeispiele der Erfindung sind in der Zeichnung dargestellt und werden im folgenden näher beschrieben. Es zeigen
- Figur 1: eine perspektivische Ansicht eines Drosselklappenstutzens, der nicht Bestandteil der Erfindung ist
- Figur 2: eine Seitenansicht des Drosselklappenstutzens nach Figur 1
- Figur 3: einen Teilschnitt entlang der Linie A - A in Figur 2
- Figur 4: eine perspektivische Ansicht eines erfindungsgemäßen Ausführungsbeispiels eines Drosselklappenstutzens
- Figur 5: eine Seitenansicht des Drosselklappenstutzens nach Figur 4
- Figur 6: einen Teilschnitt entlang der Linie B - B in Figur 5
- Figur 7: eine perspektivische Ansicht einer Drosselklappe.

Die in den Figuren dargestellten Drosselklappenstutzen besitzen ein Gehäuse 1 mit einer Durchströmöffnung 2 mit etwa kreisförmigen Querschnitt, in der eine Drosselklappe 3 mit etwa kreisförmiger Form zum Absperren der Durchströmöffnung 2 angeordnet ist. Die Drosselklappe 3 weist eine mittig über ihre Fläche sich erstreckende Aufnahmehülse 4 auf, in deren Axialausnehmung 5 runden Querschnitts eine Drosselklappenwelle 6 derart eingeführt ist, dass beidseitig die Enden der Drosselklappenwelle 6 an der Drosselklappe 3 hervorstehen und in Nadellager 7 im Gehäuse ragen.

Zur Befestigung der Drosselklappenwelle 6 in der Axialausnehmung 5 ist in der Aufnahmehülse 4 eine quer durchgehende Stufenbohrung 8 ausgebildet, deren große Stufe sich an einer Seite der Wandung der Aufnahmehülse 4 befindet und zur Aufnahme eines Schraubenkopfes 9 eine Befestigungsschraube 10 dient. Mit ihrem Gewindeschaft 11 ist die Befestigungsschraube 10 in eine entsprechende, zur Stufenbohrung 8 koaxiale Gewindebohrung 12 in der Drosselklappenwelle 6 eingeschraubt und verbindet so Drosselklappenwelle 6 und Drosselklappe 3 fest miteinander.

Die Nadellager sind mit ihren Außenringen 13 in entsprechenden Lagerausnehmungen 14 mit Presspassung eingesetzt.

Das rechte Ende der Drosselklappenwelle 6 ist durch einen elektromotorischen Antrieb entgegen der Kraft einer Rückstellfeder 15 aus einer Schließstellung der Drosselklappe 3 in deren Öffnungsstellung schwenkbar antreibbar. Der nicht dargestellte elektromotorische Antrieb befindet sich in einem Antriebsgehäuse 16 des Gehäuses 1, der auch einen Steckanschluss 17 für die Stromversorgung und die Ansteuerleitungen besitzt.

Die Durchströmöffnung 2 des Drosselklappenstutzens besitzt im Bereich der Drosselklappe 3 einen etwa zylindrischen Abschnitt 18, an den sich beidseitig kurze stark konisch sich erweiternde Abschnitte anschließen, die wiederum durch leicht konisch sich erweiternde weitere Abschnitte 20 bis zu den Anschlussöffnungen 21 der Durchströmöffnung 2 fortgesetzt werden.

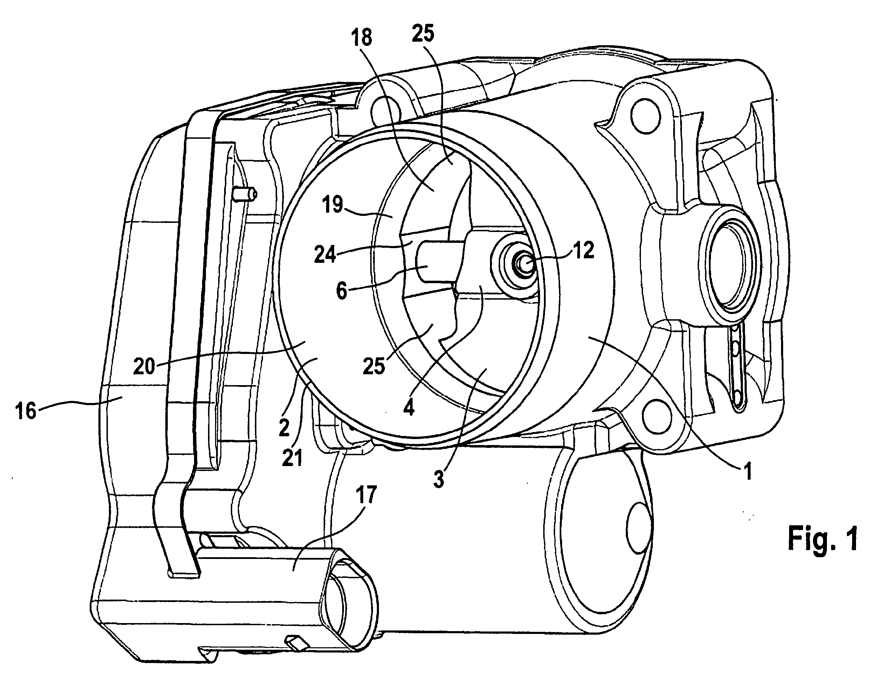

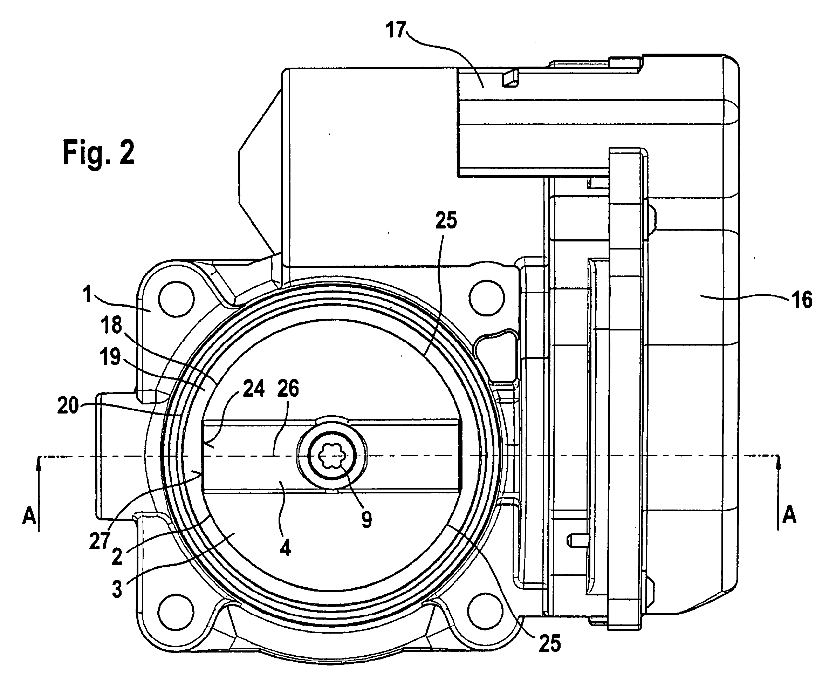

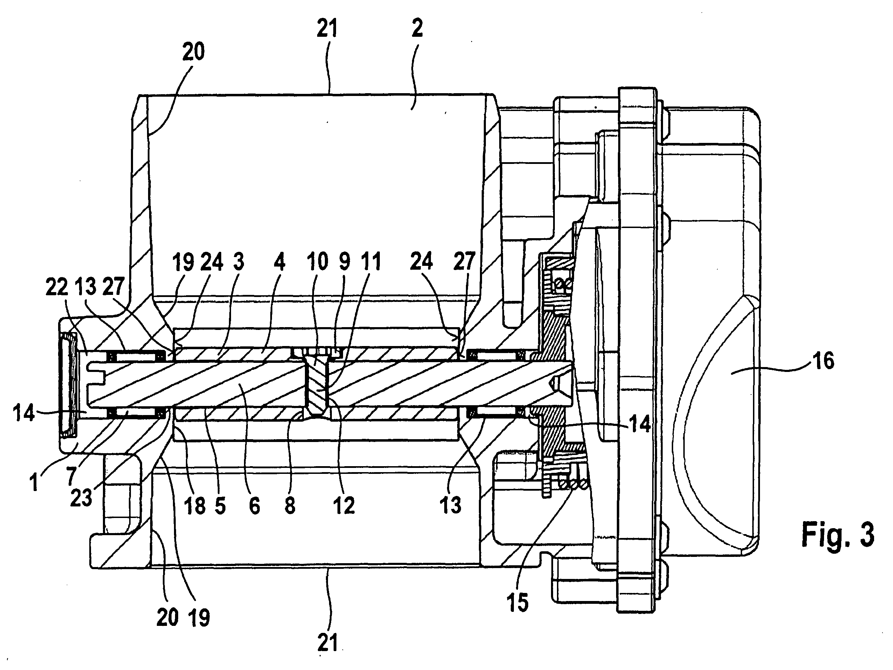

Bei dem Ausführungsbeispiel der Figuren 1 bis 3 sind die Lagerausnehmungen 14 Stufenbohrungen, in deren großen Stufen 22 die Nadellager 7 eingesetzt sind und deren kleine Stufen 23 in die Durchströmöffnung 2 münden. Dabei entspricht der Durchmesser der kleinen Stufen 23 etwa dem Durchmesser der Drosselklappenwelle 6.

Der etwa zylindrische Abschnitt 18 besitzt einen stadionförmigen Querschnitt mit zueinander parallelen und zur Längsachse 26 der Drosselklappenwelle 6 rechtwinkligen Abstützbereichen 24 in den die Mündungsöffnungen der kleinen Stufen 23 umgebenden Bereichen an der Innenwand der Durchströmöffnung 2. Jeweils zwei einander zugewandte Enden der Abstützbereiche 24 sind durch kreisbogenförmige Bereiche 25 miteinander verbunden.

An den zueinander parallelen Abstützbereichen 24 des Abschnitts 18 der Durchströmöffnung 2 sind die stirnseitigen Öffnungen der Aufnahmehülse 4 in Anlage, die Anlauflaufflächen 27 bilden und die Position der Drosselklappe 3 in der Durchströmöffnung 2 axial zur Längsachse 26 der Drosselklappenwelle 6 bestimmen und sichern.

Da bei dem Ausführungsbeispiel der Figuren 1 bis 3 sowohl die Drosselklappe 3 als auch das Gehäuse 1 aus Kunststoff spritzgegossen sind und somit einen zumindest annähernd gleichen Wärmeausdehnungskoeffizienten besitzen, kann es bei Wärmebelastung nicht zu einem Verklemmen der Anlaufflächen 27 der Aufnahmehülse 4 zwischen den Abstützbereichen 24 des Gehäuses 1 kommen.

Die Herstellung aus Kunststoff führt zu einem geringen Gewicht und niedrigen Herstellkosten.

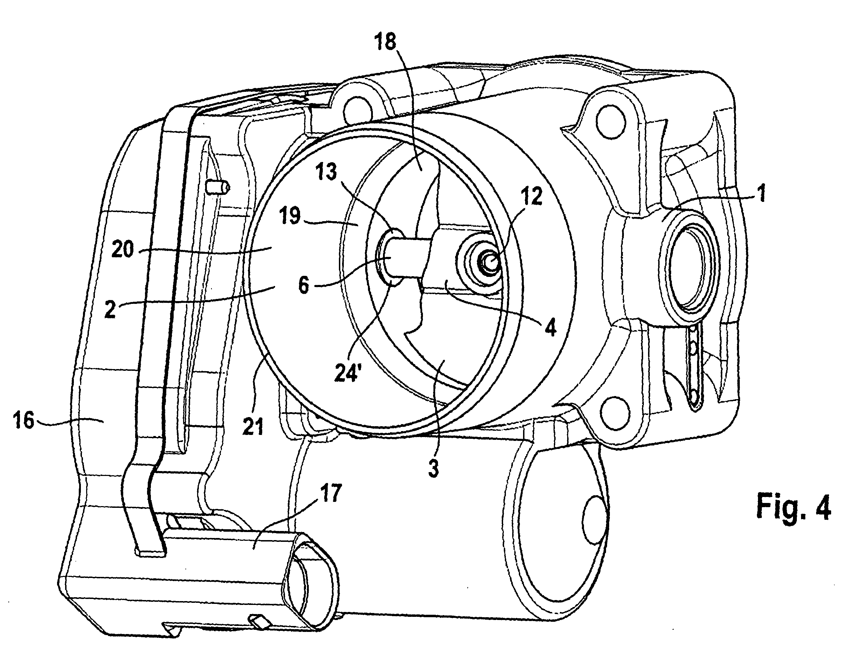

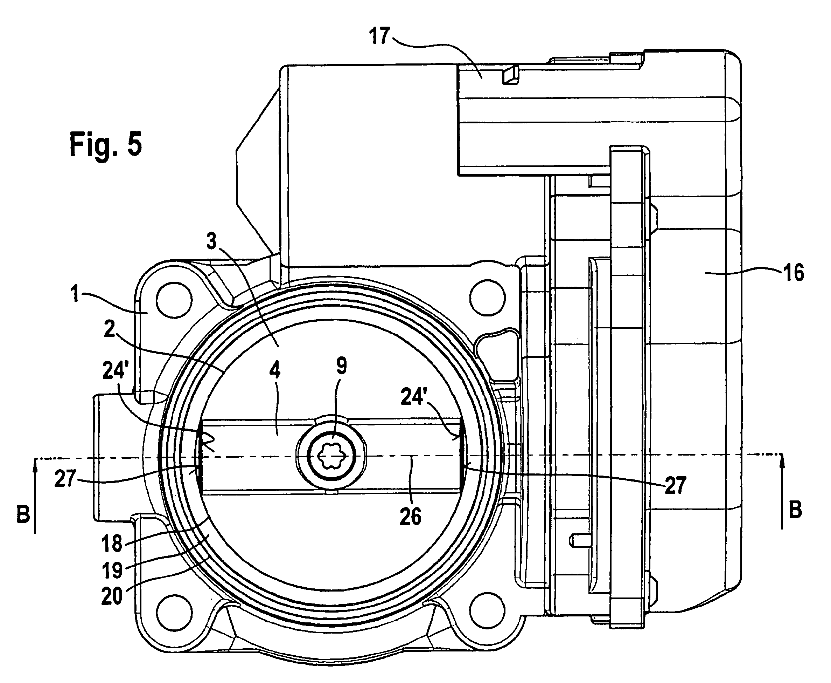

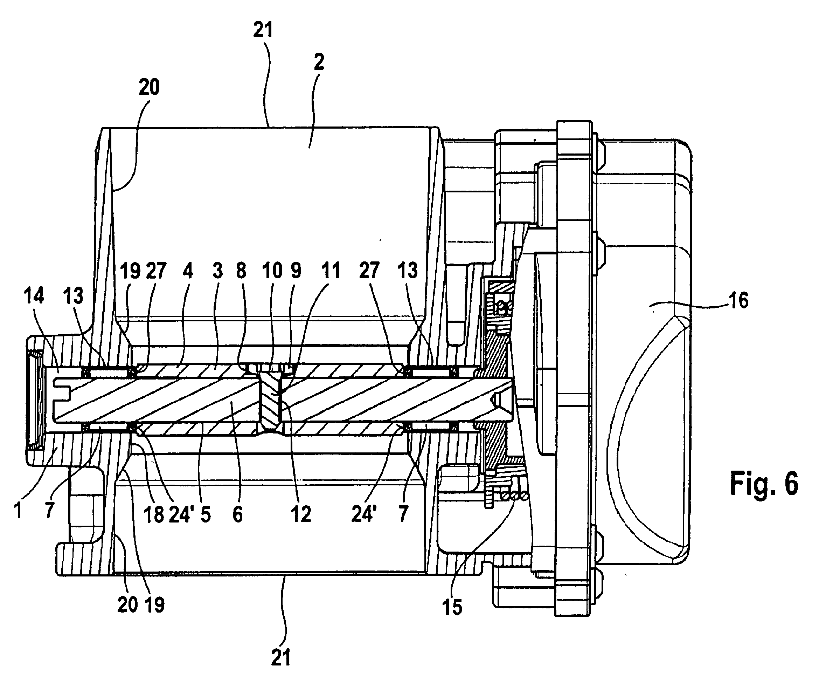

Bei dem erfindugsgemäßen Ausführungsbeispiel der Figuren 4 bis 6 sind die Lagerausnehmungen 14 durchgehende Bohrungen gleichen Durchmessers, in die die Nadellager 7 mit ihrem Außenring 13 mit Preßpassung eingesetzt sind.

Die Drosselklappe 3 besitzt den gleichen Aufbau wie bei dem Ausführungsbeispiel der Figuren 1 bis 3 und weist auch an den stirnseitigen Enden ihrer Aufnahmehülse 4 die zueinander parallelen und zur Längsachse 26 der Drosselklappenwelle 6 rechtwinkligen Anlaufflächen 27 auf. Diesen Anlaufflächen 27 sind an den zur Durchströmöffnung 2 gerichteten Stirnseiten der Außenringe 13 der Nadellager 7 in Anlage, die um ein geringes Maß in den Abschnitt 18 kreisförmigen Querschnitts der Durchströmöffnung 2 ragen. Diese zur Durchströmöffnung 2 gerichteten Stirnseiten bilden dabei Abstützbereiche 24', die die Lage der Drosselklappe 3 axial zur Längsachse 26 der Drosselklappenwelle 6 in dem Abschnitt 18 der Durchströmöffnung 2 bestimmen und sichern.

Die Bestimmung dieser Lager erfolgt durch das entsprechende axiale Einschieben mit Presspassung der Nadellager 7 in die Lagerausnehmungen 14.

Bei dem Ausführungsbeispiel der Figuren 4 bis 6 sind sowohl Gehäuse 1 als auch Drosselklappe 3 Spritzgussteile aus Aluminium.

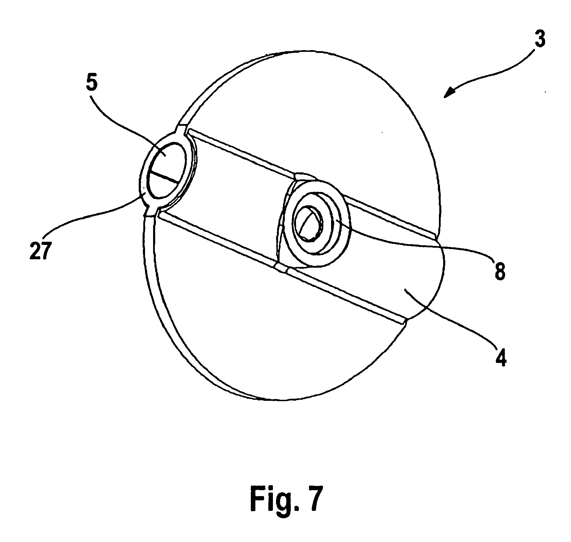

Die Drosselklappe 3 in Figur 7 ist die Darstellung der Drosselklappe 3, die für beide Ausführungsbeispiele den gleichen Aufbau besitzt und sich nur in ihrem Werkstoff unterscheidet.

## Patentansprüche

1. Drosselklappenstutzen für einen Verbrennungsmotor, mit einem Gehäuse (1) und mit einer Durchströmöffnung (2) des Gehäuses, die durch eine Drosselklappe (3) absperrbar ist, wobei die Drosselklappe auf einer Drosselklappenwelle (6) angeordnet ist, welche um ihre quer zur Längsachse der Durchströmöffnung sich erstreckende Längsachse (26) schwenkbar antreibbar ist und deren freie Enden in Lagern (7) schwenkbar gelagert sind, die in Lagerausnehmungen (14) im Gehäuse angeordnet sind und wobei die Drosselklappenwelle durch eine Axialsicherung gegen axiale Verschiebung gesichert ist, wobei die Drosselklappe an ihren Bereichen, an denen die Drosselklappenwelle axial hervorsteht, Anlaufflächen besitzt, die an gehäusefesten Abstützbereichen in Anlage sind, **dadurch gekennzeichnet, dass** die Abstützbereiche (24') die zur Durchströmöffnung (2) gerichteten Stirnseiten der Lager sind.

2. Drosselklappenstutzen nach einem der vorhergehenden Ansprüche, **dadurch gekennzeichnet, dass** die Anlaufflächen (27) sich zur Längsachse der Drosselklappenwelle (6) rechtwinklig und zueinander parallel erstrecken.

3. Drosselklappenstutzen nach einem der vorhergehenden Ansprüche, **dadurch gekennzeichnet, dass** die Abstützbereiche (24') sich rechtwinklig zur Längsachse (26) der Drosselklappenwelle (6) erstrecken.

4. Drosselklappenstutzen nach einem der vorhergehenden Ansprüche, **dadurch gekennzeichnet, dass** die Drosselklappe (3) eine Aufnahmehülse (4) aufweist, in deren Axialausnehmung (5) die Drosselklappenwelle (6) fest angeordnet ist und deren stirnseitige Enden die Anlaufflächen (27) bilden.

5. Drosselklappenstutzen nach einem der vorhergehenden Ansprüche, **dadurch gekennzeichnet, dass** die Drosselklappe (3) eine stadionförmige Umlaufkontur besitzt, die ausgehend von den zueinander parallelen Anlaufflächen (27) kreis- und/oder bogenförmig ausgebildet ist.

6. Drosselklappenstutzen nach einem der vorhergehenden Ansprüche, **dadurch gekennzeichnet, dass** die Erstreckung der Abstützbereiche (24') in Richtung der Längsachse der Durchströmöffnung (2) und/oder quer zur Richtung der Längsachse der Durchströmöffnung (2) etwa dem äußeren Durchmesser der Aufnahmehülse (4) entspricht.

7. Drosselklappenstutzen nach Anspruch 4, **dadurch gekennzeichnet, dass** die Drosselklappenwelle (6) mittels eines Aufnahmehülse (4) und Drosselklappenwelle (6) quer durchragenden Stifts oder einer quer durchragenden Schraube (10) in der Axialausnehmung (5) der Aufnahmehülse (4) befestigt ist.

8. Drosselklappenstutzen nach einem der vorhergehenden Ansprüche, **dadurch gekennzeichnet, dass** die Lager Lagerhülsen aufweisen, die mit Presspassung in die Lagerausnehmungen (14) des Gehäuses (1) eingesetzt sind.

9. Drosselklappenstutzen nach Anspruch 8, **dadurch gekennzeichnet, dass** die Lagerhülsen um ein geringes Maß in die Durchströmöffnung (2) ragen.

10. Drosselklappenstutzen nach einem der Ansprüche 8 und 9, **dadurch gekennzeichnet, dass** die Lager Wälzlager mit einem Innenring und einem Außenring (13) sind, wobei die zur Durchströmöffnung (2) gerichteten Stirnseiten der Innenringe oder der Außenringe (13) die Abstützbereiche (24') bilden.

11. Drosselklappenstutzen nach einem der vorhergehenden Ansprüche, **dadurch gekennzeichnet, dass** das Gehäuse (1) und/oder die Drosselklappe (3) aus einem Kunststoff bestehen.

12. Drosselklappenstutzen nach einem der Ansprüche 1 bis 10, **dadurch gekennzeichnet, dass** das Gehäuse (1) und/oder die Drosselklappe (3) aus Metall, insbesondere Leichtmetall bestehen.

13. Drosselklappenstutzen nach einem der vorhergehenden Ansprüche, **dadurch gekennzeichnet, dass** das Gehäuse (1) und/oder die Drosselklappe (3) ein Spritzgussteil ist.

## Claims

1. Throttle valve body for an internal combustion engine, comprising a housing (1) and a crossflow opening (2) in the housing, which can be blocked by a throttle valve (3), the throttle valve being arranged on a throttle valve shaft (6) which can be driven so as to pivot about its longitudinal axis (26) extending transversely with respect to the longitudinal axis of the crossflow opening and whose free ends are mounted such that they can pivot in bearings (7) which are arranged in bearing recesses (14) in the housing, and the throttle valve shaft being secured against axial displacement by an axial safety device, in which case, in its regions in which the throttle valve shaft protrudes axially, the throttle valve has run-on surfaces which bear on supporting regions fixed to the housing, **characterized in that** the supporting regions (24') are those ends of the bearings which are oriented towards the crossflow opening (2).

2. Throttle valve body according to one of the preceding claims, **characterized in that** the run-on surfaces (27) extend at right angles to the longitudinal axis of the throttle valve shaft (6) and parallel to each other.

3. Throttle valve body according to one of the preceding claims, **characterized in that** the supporting regions (24') extend at right angles to the longitudinal axis (26) of the throttle valve shaft (6).

4. Throttle valve body according to one of the preceding claims, **characterized in that** the throttle valve (3) has a holding sleeve (4), in whose axial recess (5) the throttle valve shaft (6) is firmly arranged and whose ends form the run-on surfaces (27).

5. Throttle valve body according to one of the preceding claims, **characterized in that** the throttle valve (3) has a stadium-like circumferential contour which, starting from the mutually parallel run-on surfaces (27), is formed in a circular and/or curved shape.

6. Throttle valve body according to one of the preceding claims, **characterized in that** the extent of the supporting regions (24') in the direction of the longitudinal axis of the crossflow opening (2) and/or transversely with respect to the direction of the longitudinal axis of the crossflow opening (2) corresponds approximately to the external diameter of the holding sleeve (4).

7. Throttle valve body according to Claim 4, **characterized in that** the throttle valve shaft (6) is fixed in the axial recess (5) of the holding sleeve (4) by means of a pin passing transversely through holding sleeve (4) and throttle valve shaft (6) or a screw (10) passing through transversely.

8. Throttle valve body according to one of the preceding claims, **characterized in that** the bearings have bearing sleeves which are inserted into the bearing recesses (14) of the housing (1) with a press fit.

9. Throttle valve body according to Claim 8, **characterized in that** the bearing sleeves project into the crossflow opening (2) by a small amount.

10. Throttle valve body according to either of Claims 8 and 9, **characterized in that** the bearings are rolling-contact bearings with an inner ring and an outer ring (13), those ends of the inner rings or of the outer rings (13) which are oriented toward the crossflow opening (2) forming the supporting regions (24').

11. Throttle valve body according to one of the preceding claims, **characterized in that** the housing (1) and/or the throttle valve (3) consist of a plastic.

12. Throttle valve body according to one of Claims 1 to 10, **characterized in that** the housing (1) and/or the throttle valve (3) consist of metal, in particular lightweight metal.

13. Throttle valve body according to one of the preceding claims, **characterized in that** the housing (1) and/or the throttle valve (3) is an injection molding.

## Revendications

1. Tubulure à papillon de régulation des gaz pour un moteur à combustion interne, comportant un corps (1) de tubulure et un conduit (2) d'écoulement des gaz à travers le corps de tubulure, conduit qui peut être obturé par un papillon de régulation des gaz (3), où le papillon de régulation des gaz est fixé sur un arbre (6) de papillon de régulation des gaz, qui peut être entraîné en pivotement autour de son axe longitudinal (26) s'étendant perpendiculairement à l'axe longitudinal du conduit d'écoulement des gaz et dont les extrémités libres sont suspendues en pivotement dans des paliers (7) disposés dans des alésages (14) pour les paliers ménagés dans le corps de la tubulure, et où l'arbre du papillon de régulation des gaz est protégé contre un décalage axial par une sécurité axiale, le papillon de régulation des gaz ayant, à ses parties par lesquelles l'arbre de papillon de régulation des gaz fait saillie dans le sens axial, des surfaces d'arrêt qui s'appliquent sur des zones d'appui solidaires du corps de la tubulure, **caractérisée par le fait que** les zones d'appui (24') sont les faces de tranche des paliers orientées vers le conduit (2) d'écoulement des gaz.

2. Tubulure à papillon de régulation des gaz selon l'une des revendications précédentes, **caractérisée par le fait que** les surfaces d'arrêt (27) s'étendent perpendiculairement à l'axe longitudinal de l'arbre (6) du papillon de régulation des gaz et sont parallèles entre elles.

3. Tubulure à papillon de régulation des gaz selon l'une des revendications précédentes, **caractérisée par le fait que** les zones d'appui (24') s'étendent perpendiculairement à l'axe longitudinal (26) de l'arbre (6) du papillon de régulation des gaz.

4. Tubulure à papillon de régulation des gaz selon l'une des revendications précédentes, **caractérisée par le fait que** le papillon de régulation des gaz (3) comporte une douille de positionnement (4) dans le creux axial (5) de laquelle l'arbre (6) du papillon de régulation des gaz est solidement fixé et dont les extrémités côté tranche forment les surfaces d'arrêt (27).

5. Tubulure à papillon de régulation des gaz selon l'une des revendications précédentes, **caractérisée par le fait que** le papillon de régulation des gaz (3) a un contour périphérique en forme de stade, qui, en partant des deux surfaces d'arrêt (27) parallèles l'une à l'autre, est en forme de cercle et/ou d'arc de cercle.

6. Tubulure à papillon de régulation des gaz selon l'une des revendications précédentes, **caractérisée par le fait que** l'étendue des zones d'appui (24') dans la direction de l'axe longitudinal du conduit (2) d'écoulement des gaz et/ou perpendiculairement à la direction de l'axe longitudinal du conduit (2) d'écoulement des gaz correspond approximativement au diamètre extérieur de la douille de positionnement (4).

7. Tubulure à papillon de régulation des gaz selon la revendication 4, **caractérisée par le fait que** l'arbre (6) du papillon de régulation des gaz est fixé au moyen d'une cheville traversant perpendiculairement la douille de positionnement (4) et l'arbre (6) du papillon de régulation des gaz ou par une vis (10) faisant saillie perpendiculairement dans le creux axial (5) de la douille de positionnement (4).

8. Tubulure à papillon de régulation des gaz selon l'une des revendications précédentes, **caractérisée par le fait que** les paliers ont des douilles de palier qui sont insérées avec assemblage serré dans les alésages (14) pour les paliers ménagés dans le corps (1) de la tubulure.

9. Tubulure à papillon de régulation des gaz selon la revendication 8, **caractérisée par le fait que** les douilles de palier font légèrement saillie dans le conduit (2) d'écoulement des gaz.

10. Tubulure à papillon de régulation des gaz selon l'une des revendications 8 et 9, **caractérisée par le fait que** les paliers sont des paliers à roulement avec une bague intérieure et une bague extérieure (13), les faces de tranches, tournées vers le conduit (2) d'écoulement des gaz, des bagues intérieures ou des bagues extérieures (13) formant les zones d'appui (24').

11. Tubulure à papillon de régulation des gaz selon l'une des revendications précédentes, **caractérisée par le fait que** le corps (1) de tubulure et / ou le papillon de régulation des gaz (3) sont en matière plastique.

12. Tubulure à papillon de régulation des gaz selon l'une des revendications 1 à 10, **caractérisée par le fait que** le corps (1) de tubulure et / ou le papillon de régulation des gaz (3) sont en métal, notamment en métal léger.

13. Tubulure à papillon de régulation des gaz selon l'une des revendications précédentes, **caractérisée par le fait que** le corps (1) de tubulure et / ou le papillon de régulation des gaz (3) sont des pièces moulées par injection.
